# EUROPEAN PATENT APPLICATION

(11) **EP 2 319 891 A1**
(43) Date of publication of application: **11.05.2011**
(21) Application number: 10172705.5
(22) Date of filing: 12.08.2010
(51) Int. Cl.: C09D 11/00

(54) **Inkjet emulsion ink**

(30) Priority: 06.11.2009 US 258723 P
(71) Applicant: Kabushiki Kaisha Toshiba, Tokyo 105-8001 (JP); Toshiba TEC Kabushiki Kaisha, Tokyo 141-8664 (JP)
(72) Inventor: Hara, Takafumi, Shinagawa-ku Tokyo 141-8664 (JP); Akiyama, Ryozo, Shinagawa-ku 141-8664 (JP); Yoshida, Maiko, Shinagawa-ku Tokyo 141-8664 (JP)
(74) Representative: Gendron, Vincent Christian

(57) **Abstract**

According to one embodiment, an inkjet emulsion ink includes coloring material, an aqueous liquid, an oil liquid, and a polyvinyl alcohol. The aqueous liquid accounts for 10 to 40% by weight of the inkjet emulsion ink, the oil liquid accounts for 60 to 90% by weight of the inkjet emulsion ink. At least a part of the oil liquid is an aromatic alcohol represented by general formula A. The polyvinyl alcohol accounts for 0.1 to 3% by weight of the inkjet emulsion ink and is represented by general formula B. The viscosity of an aqueous solution containing 4% by weight of the polyvinyl alcohol at 20°C is less than 10 mPa·s. 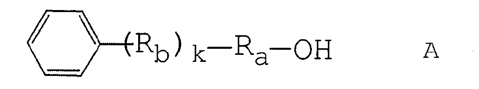 where Rₐ represents an aliphatic hydrocarbon group having 1 to 5 carbon atoms, R_{b} represents -O- or -CH₂O-, and k represents 0 or 1. 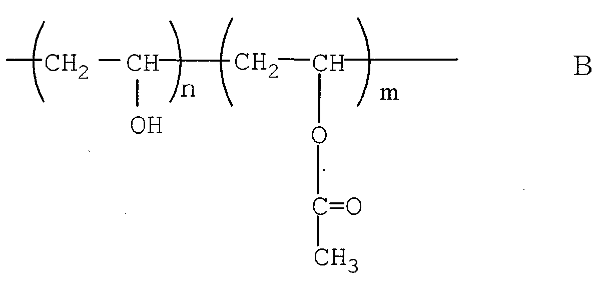 where n and m satisfy 0.4 ≤ n/(n+m) ≤ 0.73.

## Description

### FIELD

Embodiments as described herein generally relate to an inkjet emulsion ink.

### BACKGROUND

Recently, an emulsion type inkjet ink containing an aqueous component and an oil component is proposed. It is because such an ink can have advantages of both aqueous ink and oil ink.

However, an ink which is an inkjet emulsion ink suitable for printing on a paper medium, has excellent stability such as emulsion stability, and can form a high-quality image on a paper medium is not yet obtained.

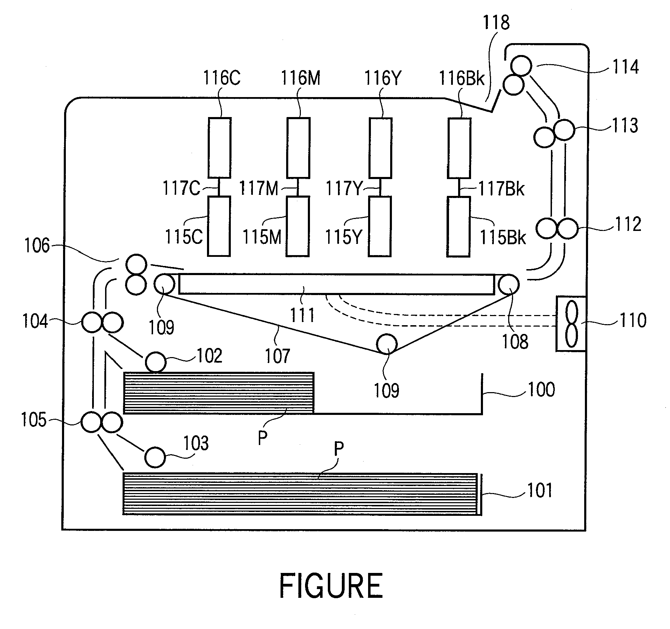

### BRIEF DESCRIPTION OF THE DRAWING

The single figure shows an example of an inkjet recording apparatus.

### DETAILED DESCRIPTION

In general, according to one embodiment, an inkjet ink includes coloring material, an aqueous liquid, an oil liquid, and a polyvinyl alcohol. The aqueous liquid accounts for 10 to 40% by weight of the inkjet emulsion ink, the oil liquid accounts for 60 to 90% by weight of the inkjet emulsion ink. At least a part of the oil liquid is an aromatic alcohol represented by general formula A. The polyvinyl alcohol accounts for 0.1 to 3% by weight of the inkjet emulsion ink and is represented by general formula B. The viscosity of an aqueous solution containing 4% by weight of the polyvinyl alcohol at 20°C is less than 10 mPa·s. 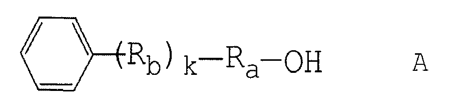 where Rₐ represents an aliphatic hydrocarbon group having 1 to 5 carbon atoms, R_{b} represents -O- or -CH₂O-, and k represents 0 or 1. 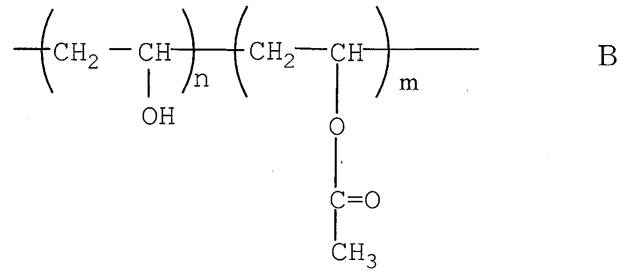 where n and m satisfy 0.4 ≤ n/(n+m) ≤ 0.73.

The following specifically describes embodiments.

In the inkjet recording apparatus in the figure, paper cassettes 100 and 101 each of which holds paper P of different size. A paper feed roller 102 or 103 takes out the paper P in response to the selected paper size from the paper cassette 100 or 101 and conveys it to conveyance roller pairs 104 and 105 and a resist roller pair 106.

A tension is given to a conveyance belt 107 by a drive roller 108 and two driven rollers 109. Holes are provided at predetermined intervals on the surface of the conveyance belt 107, and for the purpose of adsorbing the paper P onto the conveyance belt 107, a negative-pressure chamber 111 connected to a fan 110 is installed in the inside of the conveyance belt 107. Conveyance roller pairs 112, 113, and 114 are installed in the downstream of the paper conveyance direction of the conveyance belt 107.

Four rows of inkjet heads that eject inks on a paper according to image data are disposed above the conveyance belt 107. An inkjet head 115C which ejects a cyan (C) ink, an inkjet head 115M which ejects a magenta (M) ink, an inkjet head 115Y which ejects a yellow (Y) ink, and an inkjet head 115Bk which ejects a black (Bk) ink are arranged in this order from the upstream. Further, these inkjet heads 115C, 115M, 115Y, and 115Bk are provided with a cyan (C) ink cartridge 116C, a magenta (M) ink cartridge 116M, a yellow (Y) ink cartridge 116Y, and a black (Bk) ink cartridge 116Bk, respectively, each of which contains an ink of each color. These cartridges are connected to the inkjet heads via tubes 117C, 117M, 117Y, and 117Bk, respectively.

An image forming operation of the apparatus for inkjet printing having a configuration as described above is described below.

First, image processing for printing by an image processor (not shown) is initiated, and image data for printing are transferred to the respective inkjet heads 115C, 115M, 115Y, and 115Bk. Also, a sheet of the paper P of a selected paper size is taken out one by one from the paper cassette 100 or 101 by the paper feed roller 102 or 103 and conveyed to the conveyance roller pairs 104 and 105 and the resist roller pair 106. The resist roller pair 106 corrects a skew of the paper P and conveys the paper at a predetermined timing.

The negative-pressure chamber 111 draws air through the holes of the conveyance belt 107, and therefore, the paper P is conveyed in a state that it is adsorbed onto the conveyance belt 107 in a lower side of the inkjet heads 115C, 115M, 115Y, and 115Bk. Thus, the respective inkjet heads 115C, 115M, 115Y, and 115Bk and the paper P can keep a fixed space from each other. The ink of each color is ejected from each of the inkjet heads 115C, 115M, 115Y, and 115Bk in synchronism with the timing for conveying the paper P from the resist roller pair 106. Thus, a color image is formed at a desired position on the paper P. The paper P having an image formed thereon is discharged into a paper discharge tray 118 by the conveyance roller pairs 112, 113, and 114.

Each ink cartridge stores an inkjet ink of an embodiment.

The inkjet emulsion ink according to one embodiment is an emulsified liquid containing a coloring material. In the emulsified liquid, an aqueous liquid is dispersed in an oil liquid by a specific emulsifier, and the emulsified liquid is a so-called water-in-oil emulsion. At least a part of the oil liquid is a specific aromatic alcohol.

Since a specific emulsifier and a specific aromatic alcohol are contained, the ink according to one embodiment has excellent emulsion stability and storage stability, and can be stably ejected from the nozzle of the printer head. By incorporating the aqueous liquid and the oil liquid, it becomes possible to form a high-quality image on a paper medium. By incorporating the oil liquid, the content of the aqueous liquid in the ink is decreased, and therefore, deformation of a paper medium can be avoided. Moreover, at least a part of the oil liquid is a specific aromatic alcohol, and therefore, it also becomes possible to decrease damage to a transparent resin film or the like.

As used herein, the "paper medium" generally refers to various kinds of paper medium intended for printing. The paper medium can be broadly classified into coated paper and non-coated paper, the former including art paper and coat paper to which materials for improving print characteristics are applied, and the latter representing a class of papers that exploits the characteristics of the paper itself. The paper medium has a variety of applications, such as in books, documents, newspapers, wrapping, and printer papers. The paper medium also includes thick papers such as cardboards, paper containers, and boxboards. For example, so-called plain paper such as copy paper to be used in a copier or a printer for office or home use is a typical paper medium.

In the ink according to one embodiment, a coloring material is contained in the emulsified liquid.

As the coloring material, for example, a water-soluble dye can be used. Examples of the water-soluble dye include a direct dye, an acidic dye, a reactive dye, and a basic dye. Alternatively, a dispersion in which a self-dispersible pigment is dispersed in water may also be used. The self-dispersible pigment is a pigment to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through such a surface treatment.

The pigment self-dispersible in water and the water-soluble dye have very high dispersion stability in water, and therefore, even if the content of the oil liquid is increased, by forming a water-in-oil emulsion, the dispersion stability of the coloring material is maintained, the occurrence of an aggregate is less, and the nozzle in the inkjet head is not clogged. Accordingly, the ink has excellent ejection stability.

In particular, the self-dispersible pigment has excellent dispersion stability in water and also has high adsorbing performance onto a paper medium. Due to these properties, the ink containing the self-dispersible pigment can form a high-quality image.

The pigment contained in the pigment dispersion is not particularly limited, and any of an inorganic pigment and an organic pigment may be used. Examples of the inorganic pigment include titanium oxide and iron oxide. Further, a carbon black produced by a known method such as a contact method, a furnace method, or a thermal method can be used.

As the organic pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, Aniline Black or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

Since the ink is an inkjet ink, it is preferred that the pigment has an average particle diameter of from about 10 to 300 nm. It is more preferred that the pigment has an average particle diameter of from about 10 to 200 nm.

The average particle diameter of the pigment can be measured using a particle diameter analyzer according to a dynamic light scattering method. An example of a particle diameter analyzer is HPPS (Malvern Instruments Ltd.).

The content of the coloring material in the ink is not particularly limited, however, from the viewpoint of a coloring property and the dispersion stability of the pigment, it is preferably from about 0.1 to 20% by weight, more preferably from about 1 to 10% by weight.

In the ink according to one embodiment, the content W_{AQ} of the aqueous liquid is specified to be from 10 to 40% by weight of the total ink. If the content of the aqueous liquid is less than 10% by weight, the effect of the oil liquid is too large, and it is difficult to suppress the penetration of the ink into a paper medium. Moreover, when a pigment is contained as the coloring material, the interparticle distance of the pigment particles in the aqueous liquid cannot be secured. Since the dispersion stability of the pigment cannot be sufficiently obtained, the pigment particles are aggregated, resulting in deterioration of the ejection stability of the ink. On the other hand, if the content of the aqueous liquid exceeds 40% by weight, a desired penetrating performance cannot be secured, and also drying by the penetration of the ink is delayed.

It is preferred that at least 50% by weight of the aqueous liquid is water. If the aqueous liquid were entirely water, the effect of the aqueous liquid on the dispersion stability of the pigment is decreased, and therefore, the storage stability of the ink is improved.

The content of the aqueous liquid is highly correlated with the degree of deformation of a paper medium and water itself causes deformation of a paper medium. If the amount of the aqueous liquid penetrating into paper is large, the degree of deformation of the paper medium is large.
Specifically, deformation of paper such as curling when printing is pronounced. The content of the aqueous liquid in the ink is specified to be 40% by weight or less also for avoiding the deformation. The content of the aqueous liquid is more preferably from 10 to 30% by weight of the total ink.

The aqueous liquid may contain a water-soluble compound. In this case, by adjusting the viscosity of the ink, a storage property, a moisture retaining property, a defoaming property, and the like can be improved. Also, the ejection stability of the ink is further more improved.

Examples of the water-soluble compound include glycerin, diglycerin, polyglycerin, ethylene glycol, diethylene glycol, triethylene glycol, polyethylene glycol, tripropylene glycol, polypropylene glycol, 1,2,6-hexanetriol, 1,2,4-butanetriol, 1,2,3-butanetriol, 3-methyl-1,3,5-pentantriol, sorbitol, mannitol, and maltitol. Further, derivatives of these compounds can also be used.

In the ink according to one embodiment, the content W_{OL} of the oil liquid is specified to be from 90 to 60% by weight of the total ink. If the content of the oil liquid exceeds 90% by weight, the quality of an image obtained is deteriorated. On the other hand, if the content of the oil liquid is less than 60% by weight, the effect of the aqueous liquid is too large, and deformation of a paper medium is liable to be caused. The content of the oil liquid is preferably from 80 to 65% by weight of the total ink.

At least a part of the oil liquid is an aromatic alcohol represented by the following general formula A. This aromatic alcohol has a solubility in water at 25°C of less than 10% by weight and a boiling point of 180°C (1013 hpa) or higher. In view of this, it is suitable for inkjet printing. 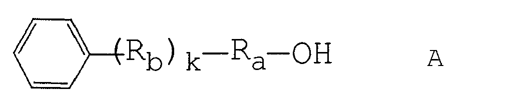 where Rₐ represents an aliphatic hydrocarbon group having 1 to 5 carbon atoms, R_{b} represents -O- or -CH₂-, and k represents 0 or 1.

As the hydrocarbon group Rₐ, for example, -CH₂-, -(CH₂)₂-, -(CH₂)₃-, -(CH₂)₄-, -CH(CH₃)CH₂-, and -CH₂CH(CH₃)- can be used.

Examples of the compound represented by general formula A include benzyl alcohol (Cas. 100-51-6), 2-phenylethyl alcohol (Cas. 60-12-8), 3-phenyl-1-propanol (Cas. 122-97-4), 4-phenyl-1-butanol (Cas. 3360-41-6), 2-phenyl-1-propanol (Cas. 1123-85-9), 1-phenyl-2-propanol (Cas. 14898-87-4), phenoxyethanol (Cas. 122-99-6), phenoxypropanol (Cas. 770-35-4, Cas. 4169-04-4), phenyl diglycol (Cas. 104-68-7), and benzyl glycol (Cas. 622-08-2). These aromatic alcohol compounds may be used alone or in combination of two or more kinds thereof.

Considering storage stability and ejection performance of the ink, benzyl alcohol (Rₐ : -CH₂-, k = 0), phenyl glycol (Rₐ : -(CH₂)₂-, R_{b} : -O-), phenoxypropanol (Rₐ : -CH(CH₃)CH₂-, R_{b} : -O-), phenyl propylene glycol (Rₐ : -CH₂CH(CH₃)-, R_{b} : -O-), and benzyl glycol (Rₐ : -(CH₂)₂-, R_{b} : -CH₂O-) are particularly preferable.

The aromatic alcohol preferably accounts for at least 50% by weight of the oil liquid. The remaining oil liquid in the paper causes bleed or produces gloss, and the print quality deteriorates. Because the aromatic alcohol does not usually remain in the paper, print quality can be improved if the oil liquid were entirely the aromatic alcohol.

The oil liquid may contain a water-insoluble organic solvent, examples of which include hexyl glycol, 2-ethylhexyl glycol, 2-ethylhexyl diglycol, dibutyl diglycol, n-nonanol, n-hexanol, n-heptanol, diethyl adipate, ethylhexyl palmitate, isocetyl myristate, and benzyl propionate. Other examples include mineral oil such as paraffinic oil, naphthenic oil, spindle oil, and machine oil; vegetable oil such as linseed oil, castor oil, soy oil, and tung oil; and hydrocarbons having 30 carbon atoms or fewer.

It is preferred that the ratio (W_{AQ}/W_{OL}) of the content W_{AQ} of the aqueous liquid to the content W_{OL} of the oil liquid is within the following range: 0.14 < (W_{AQ}/W_{OL}) < 0.7.

If the ratio is within the range, an ink which properly penetrates into a paper medium is obtained, and therefore, a high-quality image can be formed on the paper medium. Moreover, deformation of the paper medium such as curling does not at all occur.

It is more preferred that the ratio (W_{AQ}/W_{OL}) of the content W_{AQ} of the aqueous liquid to the content W_{OL} of the oil liquid is within the following range: 0.2 < (W_{AQ}/W_{OL}) < 0.5.

The aqueous liquid as described above is emulsified in the oil liquid by an emulsifier. In one embodiment, as the emulsifier, a polyvinyl alcohol (hereinafter referred to as PVA) represented by the following general formula B is contained. 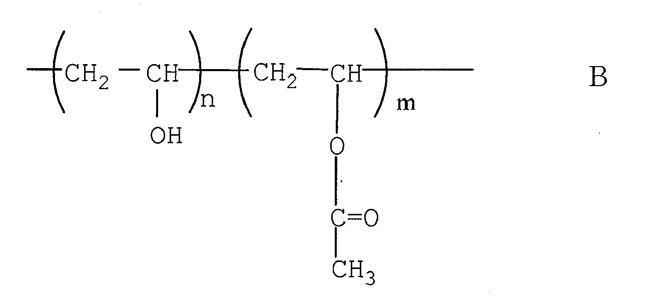 where n and m satisfy 0.4 ≤ n/(n+m) ≤ 0.73.

The PVA content in the ink is specified to be from 0.1 to 3% by weight of the total ink. If the content thereof is less than 1% by weight, sufficient emulsion stability is not obtained, and therefore, the dispersion diameter of the aqueous liquid dispersed in the oil liquid is increased. As a result, the oil liquid and the aqueous liquid easily separate from each other during long-term storage, and also ejection from the inkjet nozzle becomes unstable. On the other hand, if the content thereof exceeds 3% by weight, the viscosity of the ink is increased, or cross-linking aggregation of the coloring material and PVA which is caused by, for example, entanglement of the polymer with one another, or the like occurs. Therefore, it becomes difficult to stably eject the ink from the inkjet nozzle. The PVA content in the ink is preferably from 0.5 to 2% by weight, more preferably from 1 to 2% by weight.

In order to secure the ejection stability from the inkjet nozzle, a viscosity of an aqueous solution containing 4% by weight of the PVA at 20°C is specified as less than 10 mPa.s. If it is a PVA satisfying the following relationship: (n+m) < 1000 in the general formula B, the above-mentioned viscosity can be secured. It is more preferred that the viscosity of the aqueous solution containing 4% of the PVA at 20°C is less than 8 mPa·s.

The PVA has very high hydrophilicity and is soluble in warm water. These properties are distinct features for a synthetic polymer, and the PVA is widely used as a binder such as an adhesive. Further, the PVA can control the balance between hydrophilicity and lipophilicity, and therefore is widely used also as an emulsifier.

The present inventors focused attention on the saponification value of the PVA. The saponification value is represented by 100 x n / (n+m) (mol%) using n and m in the above general formula B. By combining the PVA having a saponification value of 40 mol% or more and 73 mol% or less and the above-mentioned aromatic alcohol compound, it becomes possible to obtain a favorable emulsion ink. That is, a water-in-oil emulsion ink in which the aqueous liquid containing the coloring material is uniformly emulsified in the oil liquid containing the aromatic alcohol compound could be obtained. Such a finding was found for the first time by the present inventors.

In the ink according to one embodiment, the aqueous liquid and the oil liquid are contained in an emulsified liquid. The aqueous liquid and the oil liquid are different in the rate of penetration into paper. Specifically, the aqueous liquid has a low penetration rate, and the oil liquid penetrates faster than the aqueous liquid. Accordingly, the aqueous liquid and the oil liquid start to separate from each other at the same time that they start to penetrate into paper.

The pigment contained as the coloring material can be stably dispersed in the emulsified liquid in a state that the aqueous liquid and the oil liquid are emulsified. When the aqueous liquid and the oil liquid separate from each other, the dispersion stability of the pigment in the ink is decreased. The compatibility between the aqueous liquid and the oil liquid is lost, and therefore, aggregation of the pigment proceeds voluntarily. As a result, penetration of the pigment into paper is suppressed.

When a pigment is used as the coloring material, the pigment is retained in the vicinity of a surface of paper. When a water-soluble dye is used as the coloring material, the water-soluble dye is retained in the vicinity of a surface of paper, similarly. In either case, the density of an image obtained by using the ink according to one embodiment is increased as compared with the case where an oil ink is used.

Further, since the oil liquid is contained in the emulsified liquid as a part thereof, the content of the aqueous liquid in the ink is decreased as compared with a common aqueous ink. As a result, it became possible to suppress the effect on a paper medium such as curling or cockling.

Moreover, at least a part of the oil liquid is a specific aromatic alcohol, and the aromatic alcohol has lower lipophilicity than a mineral oil or the like. Due to this, damage to a transparent resin film or the like could be reduced.

The inkjet emulsion ink according to one embodiment is prepared as follows. First, a coloring material, an aqueous liquid, and an emulsifier are mixed, whereby a mixture is prepared. The resulting mixture is added to an oil liquid and emulsified therein while subjecting to a mechanical shearing force, whereby a water-in-oil emulsion ink is obtained. When emulsifying, for example, a mechanical emulsification method or a phase inversion emulsification method can be used.

In the preparation of the emulsified liquid, in addition to a common stirrer, an apparatus that applies a mechanical shearing force can be used. The mechanical shearing apparatus may be either an apparatus of a type which does not use a medium or an apparatus of a type which uses a medium.

Specific examples of the mechanical shearing device which does not use a medium include Ultra Turrax (manufactured by IKA Japan K.K.), T.K. Auto Homo Mixer (manufactured by PRIMIX Corporation), T.K. Pipeline Homo Mixer (manufactured by PRIMIX Corporation), T.K. Filmics (manufactured by PRIMIX Corporation), Clear Mix (manufactured by M Technique Co., Ltd.), Clear SS5 (manufactured by M Technique Co., Ltd.), Cavitron (manufactured by Eurotec Co., Ltd.), Fine Flow Mill (manufactured by Pacific Machinery & Engineering Co., Ltd.), Microfluidizer (manufactured by Mizuho Industry Co., Ltd.), Ultimizer (manufactured by Sugino Machine Limited), Nanomizer (manufactured by Yoshida Kogyo Co. Ltd.), Genus PY (manufactured by Hakusui Chemical Industries Co., Ltd.), and NANO 3000 (manufactured by Beryu Co., Ltd.).

Specific examples of the mechanical shearing device which uses a medium include Visco Mill (manufactured by Aimex Co., Ltd.), Apex Mill (manufactured by Kotobuki Industries Co., Ltd.), Star Mill (manufactured by Ashizawa Finetech Co., Ltd.), DCP Superflow (manufactured by Nippon Eirich Co., Ltd.), MP Mill (manufactured by Inoue Manufacturing Co., Ltd.), Spike Mill (manufactured by Inoue Manufacturing Co., Ltd.), Mighty Mill (manufactured by Inoue Manufacturing Co., Ltd.), and SC Mill (manufactured by Mitsui Mining Co., Ltd.).

It is desired that the shearing force to be applied is appropriately adjusted according to the type of material, emulsification method, or the like. If the shearing force is too large, the dispersion diameter of the aqueous liquid containing the coloring material becomes too small, and the probability that the coloring material comes into contact with the oil liquid is increased. On the other hand, when the shearing force is too small, emulsification and dispersion are not sufficient and a desired dispersion diameter cannot be obtained. In either case, coalescence of the aqueous liquid droplets occurs, and when a pigment is used as the coloring material, also aggregation of this pigment occurs. As a result, there is a risk that a uniform emulsified liquid may not be obtained.

By applying an appropriate shearing force to effect emulsification, the water-in-oil emulsion ink according to one embodiment is produced. If the dispersion diameter of the aqueous liquid containing the coloring material in the oil liquid exceeds 2 µm, the ejection stability is decreased. From the viewpoint of ejection stability, it is preferred that the aqueous liquid containing the coloring material is emulsified and dispersed in the oil liquid in a state that it has a dispersion diameter of 2 µm or less. The dispersion diameter of the aqueous liquid is more preferably 1 µm or less, most preferably 0.5 µm or less.

Since the ink is for inkjet printing, the ink according to one embodiment should have a viscosity suitable for ejection from a nozzle of a head in an inkjet printer. Specifically, the viscosity of the ink at 25°C is preferably from 5 to 50 mPa·s, more preferably from 5 to 30 mPa·s. If the viscosity is 30 mPa·s or less, the controlled head temperature during an ejection operation can be set to a relatively low temperature.

In order to adjust the properties of the ink such as ejection performance or penetrability to optimum conditions, a surfactant may be blended in the ink.

Examples of surfactant include
polyoxyethylenealkyl ether, polyoxyalkylenealkyl ether, polyoxyethylene polycyclic phenylether, polyoxyalkylene polycyclic phenylether, glycerin fatty acid ester, and EO adducts of dimethylolheptane.

Acetyleneglycol surfactants and fluorosurfactants also can be used. Examples of acetyleneglycol surfactant include
2,4,7,9-tetramethyl-5-decyne-4,7-diol, 3,6-dimethyl-4-octine-3,6-diol, and 3,5-dimethyl-1-hexin-3-ol. Specifically, Surfynol 104, 61, 465, 485, and TG (Air Products) can be used, for example.

Examples of fluorosurfactant include a perfluoroalkylethylene oxide adduct,
perfluoroalkylamine oxide, perfluoroalkyl carboxylate, and perfluoroalkyl sulfonic acid. Specifically, Megafac F-443, F-444, F-470, F-494 (DIC Corporation), Novec FC-430, FC-4430 (3M), and Surflon S-141, S-145, S-111N, S-113 (AGC Seimi Chemical Co., Ltd.) can be used.

The surfactant can exhibit its effect without causing any inconvenience, as long as it is about 1.0% by weight or less of the total ink.

Additives such as a pH adjuster, a preservative, and/or an anti-fungal agent may be blended, as required. Examples of pH adjuster include potassium dihydrogen phosphate, disodium hydrogen phosphate, and sodium hydroxide.

Examples of preservative and anti-fungal agent include sodium benzoate, pentachlorophenol sodium, 2-pyridinethiol-1-oxide sodium, sodium sorbate, sodium dehydroacetate, and 1,2-dibenzisothiazolin-3-one (Proxel CRL, Proxel BDN, Proxel GXL, Proxel XL-2, Proxel TN; available from ICI).

Print image quality and storage stability can be further improved by blending these additives.

Examples of the ink are described below.

As the aqueous liquid, water was prepared, and as the oil liquid, components shown in the following Table 1 were prepared.

**Table 1**

| Abbreviation | Name of compound |
|---|---|
| OL1 | Benzyl alcohol (manufactured by Tokyo Ohka Kogyou Co., Ltd.) |
| OL2 | Benzyl glycol (BzG, manufactured by Nippon Nyukazai Co., Ltd.) |
| OL3 | Phenylpropylene glycol (PhFG, manufactured by Nippon Nyukazai Co., Ltd.) |

OL1, OL2, and OL3 are all aromatic alcohols represented by the following general formula A.

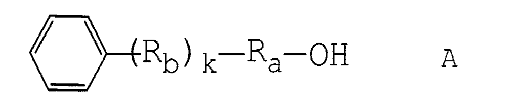

As the emulsified liquid, an aqueous solution containing 20% by weight of a PVA was prepared. The emulsified liquid was prepared as follows. First, while stirring water at normal temperature, a PVA was added thereto. Then, the temperature of the resulting mixture was raised to about 80°C using a hot stirrer to dissolve the PVA. After about 2 hours, the resulting solution was cooled by leaving it as such at room temperature, whereby an aqueous solution containing 20% by weight of the PVA was obtained.

The thus obtained aqueous solutions were named Emulsifiers E1 to E9 and are summarized in the following Table 2 together with the PVAs used. In the following Table 2, the names of the PVAs, saponification values, and viscosities are summarized together with the abbreviations of the emulsifiers. Each of the PVAs is represented by the following general formula B, and the saponification values are obtained from the formula: 100 x n / (n+m) using values of n and m.

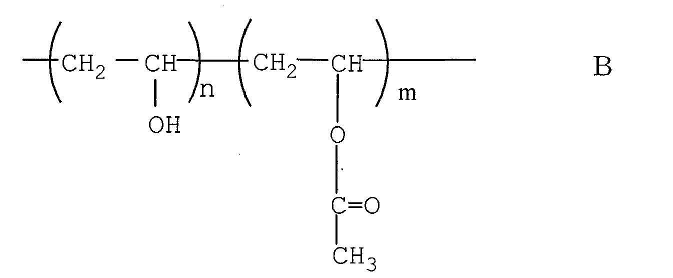

The viscosity is a value obtained by measuring the viscosity of an aqueous solution containing 4% by weight of each PVA and was measured using a cone-plate type viscosity meter, VISCOMETER TV-22 (manufactured by Toki Sangyo Co., Ltd.) with a cone rotor (0.8° x R24) under the conditions of a rotational speed of 25 rpm and a temperature of 25°C.

**Table 2**

| Emulsifier | Name of compound (manufacturer) | Saponification value (mol%) | Viscosity (mPa·s) |
|---|---|---|---|
| E1 | Gosenol KP-08R (manufactured by Nippon Synthetic Chemical Industry Co., Ltd.) | 72 | 6.8 |
| E2 | Gosenol NK-05R (manufactured by Nippon Synthetic Chemical Industry Co., Ltd.), | 73 | 5 |
| E3 | Gosenol KL-3 (manufactured by Nippon Synthetic Chemical Industry Co., Ltd.) | 80 | 3 |
| E4 | Gosenol GL-3 (manufactured by Nippon Synthetic Chemical Industry Co., Ltd.), | 87.1 | 5 |
| E5 | PVA 505 (Kuraray Co., Ltd.) | 73.5 | 5 |
| E6 | Gosefimer LW-100 (manufactured by Nippon Synthetic Chemical Industry Co., Ltd.) | 42.5 | 12 |
| E7 | Gosefimer LW-200 (manufactured by Nippon Synthetic Chemical Industry Co., Ltd.) | 50 | 3 |
| E8 | LM-20 (Kuraray Co., Ltd.) | 40 | 3.5 |
| E9 | LM-25 (Kuraray Co., Ltd.) | 38 | 3.5 |

Further, as an additive, surfactants shown in the following Table 3 were prepared.

**Table 3**

| Abbreviation | Name of compound, etc. |
|---|---|
| S1 | DMH-40 |
| S2 | DMH-20 |

These surfactants are all EO adducts of dimethylolheptane (manufactured by Nippon Nyukazai Co., Ltd.) represented by the following general formula C. S1 (DMH-40) is an aqueous surfactant agent having an average addition molar number (h+j) of 4; and S2 (DMH-20) is an oily surfactant having an average addition molar number (h+j) of 2.

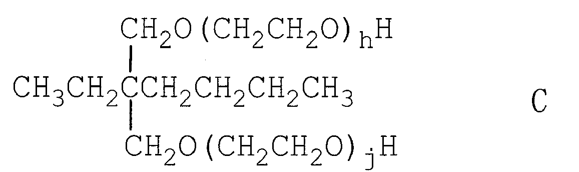

The respective components were blended according to the formulation shown in the following Table 4, whereby ink samples of No. 1 to No. 23 were prepared. The numerical values for the aqueous liquid, oil liquid, emulsifier, and additive in the following Table 4 indicate the percentages by weight of the respective components in the ink.

As the coloring material, a self-dispersible pigment (C1) and a water-soluble dye (C2) were prepared.

C1: JET-465M (manufactured by Cabot Corporation)

C2: Remazol Br. Green 6B (manufactured by Dystar Co., Ltd.)

Incidentally, in C1, the pigment having a functional group on the surface thereof is dispersed in water. The amount of water in this dispersion is included in the amount of the aqueous liquid in the following table. In the ink of No. 10, C2 was blended such that the content of the pigment was 3% by weight of the total ink. In the other inks, C1 was used and blended such that the content of the pigment was 3% by weight of the total ink.

Each ink sample was prepared as follows. First, a coloring material, an aqueous liquid, and an emulsifier were mixed using a stirrer, whereby a mixture was obtained. Then, while stirring an oil liquid at 1500 rpm using a magnet stirrer, the obtained mixture was added thereto. The mixture was added dropwise to the oil liquid using a tubing pump. After the total amount of the mixture was added, the resulting mixture was stirred for 1 hour, whereby an ink sample was obtained.

In the following Table 4, the ratio (W_{AQ}/W_{OL}) of the content of the aqueous liquid (W_{AQ}) to the content of the oil liquid (W_{OL}) is also shown.

**Table 4**

| No. | Coloring material | Aqueous liquid | Oil liquid | | | Emulsifier (type) | Additive | | W_{AQ}/W_{OL} |
|---|---|---|---|---|---|---|---|---|---|
| | | | OL1 | OL2 | OL3 | | S1 | S2 | |
| 1 | 3 | 20 | 72 | | | 5 (E1) | | | 0.28 |
| 2 | 3 | 20 | 72 | | | 5 (E2) | | | 0.28 |
| 3 | 3 | 20 | 72 | | | 5 (E3) | | | 0.28 |
| 4 | 3 | 20 | 72 | | | 5 (E4) | | | 0.28 |
| 5 | 3 | 20 | 72 | | | 5 (E5) | | | 0.28 |
| 6 | 3 | 20 | 72 | | | 5 (E6) | | | 0.28 |
| 7 | 3 | 20 | 72 | | | 5 (E7) | | | 0.28 |
| 8 | 3 | 20 | 72 | | | 5 (E8) | | | 0.28 |
| 9 | 3 | 20 | 72 | | | 5 (E9) | | | 0.28 |
| 10 | 3 | 20 | 72 | | | 5 (E1) | | | 0.28 |
| 11 | 3 | 20 | | 72 | | 5 (E7) | | | 0.28 |
| 12 | 3 | 20 | | | 72 | 5 (E7) | | | 0.28 |
| 13 | 3 | 10 | 72 | | | 15 (E1) | | | 0.14 |
| 14 | 3 | 5 | 72 | | | 20 (E1) | | | 0.28 |
| 15 | 3 | 22.5 | 72 | | | 2.5 (E1) | | | 0.31 |
| 16 | 3 | 24.5 | 72 | | | 0.5 (E1) | | | 0.34 |
| 17 | 3 | 24.75 | 72 | | | 0.25 (E1) | | | 0.34 |
| 18 | 3 | 19 | 72 | | | 5 (E1) | 1 | | 0.26 |
| 19 | 3 | 20 | 71 | | | 5 (E1) | | 1 | 0.28 |
| 20 | 3 | 32 | 60 | | | 5 (E1) | | | 0.53 |
| 21 | 3 | 34 | 58 | | | 5 (E1) | | | 0.5 |
| 22 | 3 | 12 | 80 | | | 5 (E1) | | | 0.15 |
| 23 | 3 | 2 | 90 | | | 5 (E1) | | | 0.02 |

Incidentally, the emulsifiers used are all aqueous solutions containing 20% by weight of PVA, and therefore, the PVA contents in the respective inks of Nos. 1 to 23 are as follows. In the inks of Nos. 13, 14, 15, 16, and 17, the PVA contents are 3% by weight, 4% by weight, 0.5% by weight, 0.1% by weight, and 0.05% by weight, respectively, and in the other inks, the PVA content is 1% by weight in each case.

The obtained ink samples were evaluated in term of emulsion stability, storage stability, and ejection stability. The evaluation methods are as follows, respectively.

### (Emulsion stability)

A 10 mL portion of each of the obtained inks was collected and put in a screw tube. The tube was airtightly closed and left as such at room temperature. After one day, the presence or absence of separation was visually observed. The case where separation was observed was evaluated as "bad", and the case where separation was not observed was evaluated as "good".

### (Storage stability)

The inks evaluated as "good" in terms of the above-mentioned emulsion stability were stored in a thermostat bath at 65°C. After one week, the presence or absence of separation and the viscosity increase ratio of the inks were examined. The presence or absence of separation was visually observed. The percentage increase of viscosity was calculated according to the formula: 100((V₇-V₀)/V₀). The V₇ denotes the viscosity after one week, and the V₀ denotes the initial viscosity. The viscosity was measured using a cone-plate type viscosity meter, VISCOMETER TV-22 (manufactured by Toki Sangyo Co., Ltd.).

In comprehensive consideration of the presence or absence of separation and the percentage increase of viscosity of the ink, the storage stability was evaluated according to the following criteria.

"good": Separation is absent and the percentage increase of viscosity is less than ±5%.

"bad": Separation is present or the percentage increase of viscosity is ±5% or more.

### (Ejection stability)

An ink was put in a CB1 head manufactured by Toshiba Tech Corporation, and the ink was continuously ejected from all nozzles for 10 minutes from when all the nozzles began to be able to eject the ink. After 10 minutes, the number of misfiring nozzles was counted. Such an ejection test was performed three times, and an average value was calculated, and then, the ejection stability was evaluated according to the following criteria.
A: The number of misfiring nozzles is 1 or less.
B: The number of misfiring nozzles is less then 5.
C: The number of misfiring nozzles is 5 or more.

The case where the number of misfiring nozzles is less then 5 is evaluated as acceptable.

Further, each ink sample was evaluated in terms of performance of suppressing deformation of plain paper. By using an inkjet printing apparatus mounted with the above-mentioned head, solid printing was performed on the entire surface of the plain paper and a printed matter was formed. As the plain paper, Toshiba Copy Paper was prepared. The obtained printed matter was placed on a desk under the conditions of 25°C and 50% RH. After three days, a curling degree when the end of the printed matter was fixed was determined. The case where the paper of the printer matter curls in a concave direction was defined as + (plus curl), and the maximum distance from the surface of the desk was measured using a ruler.
A: Less than 10 mm
B: 10 mm or more and less than 20 mm
C: 20 mm or more

The case where the distance is less than 20 mm is evaluated as acceptable in terms of the performance of suppressing deformation of paper. The case where sufficient ejection stability was not secured and printing could not be performed was evaluated as "Not evaluable". The obtained results are summarized in the following Table 5.

**Table 5**

| Ink No. | Emulsion stability | Storage stability | Ejection stability | Performance of Suppressing deformation |
|---|---|---|---|---|
| 1 | good | good | B | A |
| 2 | good | good | B | A |
| 3 | bad | - | C | Not evaluable |
| 4 | bad | - | C | Not evaluable |
| 5 | bad | - | C | Not evaluable |
| 6 | good | good | C | A |
| 7 | good | good | B | A |
| 8 | good | good | B | A |
| 9 | good | bad | B | A |
| 10 | good | good | A | A |
| 11 | good | good | B | A |
| 12 | good | good | B | A |
| 13 | good | good | B | A |
| 14 | good | good | C | A |
| 15 | good | good | B | A |
| 16 | good | good | B | A |
| 17 | bad | - | C | Not evaluable |
| 18 | good | good | A | A |
| 19 | good | good | A | A |
| 20 | good | good | B | B |
| 21 | good | good | B | C |
| 22 | good | good | B | A |
| 23 | good | bad | C | A |

Further, the printed matter obtained for the evaluation of the performance of suppressing deformation of paper was filed in a clear book manufactured by Kokuyo Co., Ltd. After one week, the performance of suppressing deformation of a film was evaluated from the degree of deformation of the film. As a result, in any of the cases of the inks of Nos. 1, 2, 6 to 16, and 18 to 23, deformation of the film was not observed.

As shown in the above Table 5, the inks of Nos. 3 to 5 all have low emulsion stability and also have poor ejection stability. As shown in the above Table 4, the PVAs contained in the inks of Nos. 3, 4, and 5 are E4, E5, and E6, respectively, and it is shown in the above Table 3 that these PVAs have a saponification value larger than 73 mol%.

The ink of No. 6 has poor ejection stability. As shown in the above Table 4, the PVA contained in the ink of No. 6 is E6, and it is shown in the above

Table 3 that a viscosity of an aqueous solution containing 4% by weight of this PVA at 20°C is 10 mPa_{·}s or more.

The ink of No. 9 has low storage stability. As shown in the above Table 4, the PVA contained in the ink of No. 9 is E9, and it is shown in the above Table 3 that this PVA has a saponification value smaller than 40 mol%.

If the saponification value of a PVA to be contained is outside the range from 40 to 73 mol%, a desired effect cannot be obtained. Also, if the viscosity of an aqueous solution containing 4% by weight of a PVA at 20°C is 10 mPa·s or more, an ink containing such PVA does not have desired properties.

Even if a PVA satisfies the requirements of the saponification value and viscosity, when the PVA content is outside the predetermined range, desired properties cannot be obtained. The ink of No. 14 in which the PVA content is 4% by weight has poor storage stability, and the ink of No. 17 in which the PVA content is 0.05% by weight has poor storage stability and also poor emulsion stability.

Further, even if a PVA that satisfies the requirements of the saponification value and viscosity is blended at a predetermined content, when the contents of both oil liquid and aqueous liquid are not within the predetermined ranges, a desired effect cannot be obtained. The ink of No. 21 in which the content of the oil liquid is as low as 58% by weight shows a high degree of deformation of a paper medium. The ink of No. 23 in which the content of the aqueous liquid is as low as 2% by weight and the content of the oil liquid as high as 90% by weight has poor storage stability and ejection stability.

The PVAs contained in the inks of Nos. 1, 2, 7, 8, 10 to 13, 15, 16, 18 to 20, and 22 all have a saponification value of 40 or more and 73 or less. Further, in all cases, a viscosity of aqueous solution containing 4% by weight of the PVA at 20°C is less than 10 mPa·s, and the contents thereof in the inks are in the range from 0.1 to 3% by weight. In addition, in the inks of Nos. 1, 2, 7, 8, 10 to 13, 15, 16, 18 to 20, and 22, the content of the aqueous liquid is in the range from 10 to 40% by weight, and the content of the oil liquid is in the range from 60 to 90% by weight.

Since the inks of Nos. 1, 2, 7, 8, 10 to 13, 15, 16, 18 to 20, and 22 satisfy all of these requirements, inkjet emulsion inks having excellent emulsion stability, storage stability, and ejection stability were obtained. Moreover, these inks can form a high-quality image without causing deformation of a paper medium.

The inkjet emulsion ink of one embodiment has excellent stability such as emulsion stability, and can form a high-quality image on a paper medium without causing deformation of a paper medium.

Further, by the method for inkjet printing of one embodiment, a high-quality image can be formed using an inkjet emulsion ink having excellent stability such as emulsion stability without causing deformation of a paper medium.

## Claims

1. An inkjet emulsion ink **characterized by** comprising:
a coloring material;
an aqueous liquid whose content W_{AQ} in the inkjet emulsion ink is from 10 to 40% by weight;
an oil liquid whose content W_{OL} in the inkjet emulsion ink is from 60 to 90% by weight, and that is at least partly an aromatic alcohol represented by general formula A: 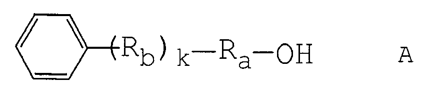 where Rₐ represents an aliphatic hydrocarbon group having 1 to 5 carbon atoms; R_{b} represents -O- or -CH₂O-; and k represents 0 or 1; and
a polyvinyl alcohol that accounts for 0.1 to 3% by weight of the inkjet emulsion ink and is represented by general formula B, a viscosity of an aqueous solution comprising 4% by weight of the polyvinyl alcohol at 20°C being less than 10 mPa·s: 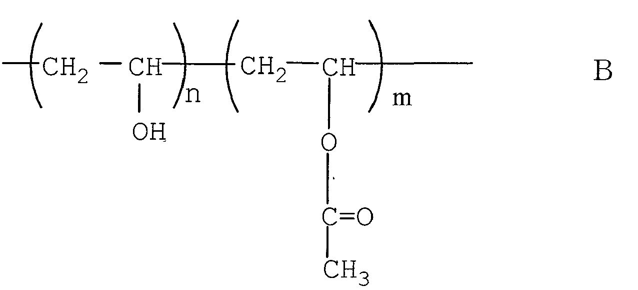 where n and m satisfy 0.4 ≤ n/ (n+m) ≤ 0.73.

2. The ink according to claim 1, **characterized in that** W_{AQ} and W_{OL} satisfy 0.14 < (W_{AQ}/W_{OL}) < 0.7.

3. The ink according to claim 2, **characterized in that** the W_{AQ} and W_{OL} satisfy 0.2 < (W_{AQ}/W_{OL}) < 0.5.

4. The ink according to claim 1, **characterized in that** at least 50% by weight of the aqueous liquid is water.

5. The ink according to claim 1, **characterized in that** at least 50% by weight of the oil liquid is the aromatic alcohol.

6. The ink according to claim 1, **characterized in that** the aqueous solution has a viscosity of less than 8 mPa_{·}s at 20°C.

7. The ink according to claim 1, **characterized in that** the polyvinyl alcohol accounts for 0.5 to 2% by weight of the inkjet ink.

8. The ink according to claim 7, **characterized in that** the polyvinyl alcohol accounts for 1 to 2% by weight of the inkjet ink.

9. The ink according to claim 1, **characterized in that** the coloring material is a pigment comprising a functional group or a salt thereof on a surface thereof.

10. The ink according to claim 1, **characterized in that** the coloring material is a water-soluble dye.

11. The ink according to claim 1, **characterized in that** a viscosity of the ink at 25°C is 5 to 30 mPa_{·}s.

12. The ink according to claim 1, **characterized in that** the aqueous liquid comprises a water-soluble compound selected from the group consisting of glycerin, diglycerin, polyglycerin, ethylene glycol, diethylene glycol, triethylene glycol, polyethylene glycol, tripropylene glycol, polypropylene glycol, 1,2,6-hexanetriol, 1,2,4-butanetriol, 1,2,3-butanetriol, 3-methyl-1,3,5-pentantriol, sorbitol, mannitol, maltitol, and derivatives thereof.

13. A method for inkjet printing **characterized by** comprising:
ejecting at least one type of an ink composition from an inkjet head onto a paper medium to form an image, the ink composition being the inkjet emulsion ink according to claim 1.

14. The method according to claim 13, **characterized in that** the image is formed using one type of ink composition.

15. The method according to claim 13, **characterized in that** the image is formed using two or more types of ink compositions of different colors.
